# EUROPÄISCHE PATENTSCHRIFT

(11) **EP 1 170 578 B1**
(45) Veröffentlichungstag und Bekanntmachung des Hinweises auf die Patenterteilung: **13.08.2008**
(21) Anmeldenummer: 01115140.4
(22) Anmeldetag: 22.06.2001
(51) Int. Cl.: G01L 19/06

(54) **Überlastfester Drucksensor**
Overload-proof pressure sensor
Capteur de pression résistant aux surcharges

(30) Priorität: 30.06.2000 DE 10031129
(43) Veröffentlichungstag der Anmeldung: 09.01.2002
(73) Patentinhaber: VEGA Grieshaber KG, 77709 Wolfach (DE)
(72) Erfinder: Bühler, Ewald, 77709 Wolfach (DE); Jakob, Jörn, 77709 Wolfach (DE); Liehr, Manfred, 77709 Wolfach (DE)
(74) Vertreter: Patentanwälte Westphal, Mussgnug & Partner

(56) Entgegenhaltungen:
- EP-A- 0 339 981
- EP-A- 0 373 536
- DE-A- 3 912 217
- DE-C- 4 207 952

## Beschreibung

Die Erfindung betrifft einen überlastfesten Drucksensor der im Oberbegriff des Patentanspruchs 1 genannten Art.

Ein solcher Drucksensor ist z. B. aus EP 0 373 536 B1 bekannt.

Bei Druckmessungen in Rohrleitungen bzw. Behältern mit eingebauten Ventilen entstehen beim Öffnen der Ventile sogenannte Druckschläge verursacht durch plötzliches Einströmen der Verfahrensflüssigkeit. Die durch diese Druckschläge verursachten Druckspitzen sind bisweilen so groß, dass die Messmembran des Drucksensors, die mit diesen Druckspitzen beaufschlagt wird, beschädigt bzw. zerstört werden kann. Damit ist die Funktionsfähigkeit des Drucksensors nicht mehr gewährleistet.

In der genannten EP 373 536 B1 ist eine Drucksensoranordnung beschrieben, die Mittel zum Überlastschutz von unerwünschten Druckschlägen aufweist. Der Drucksensor weist dort eine abgestufte Kammer auf, die im Überlastfall, dass heißt bei einem Übersteigen des zu messenden Druckes über eine Druckobergrenze, die Messmembran mittels eines Anlageringes abstützt und somit eine Beschädigung bzw. Zerstörung der Messmembran, die eine konstante Dicke aufweist, verhindert.

Die oben beschriebenen Druckspitzen treten jedoch nicht nur beim Öffnen der Ventile, sondern auch beim Schließen der Ventile auf. Durch ein Rückströmen der Verfahrensflüssigkeit entstehen dann unerwünschte Saugschläge. Die durch die Saugschläge verursachten Druckspitzen können ebenfalls so groß sein, dass die Messmembran in diesem sogenannten Unterlastfall beschädigt oder gar zerstört wird.

Ein Drucksensor, der sowohl Mittel zum Überlastschutz als auch Mittel zum Unterlastschutz aufweist, ist in DE 42 07 952 C1 beschrieben. Allerdings muss dort eine ganz spezielle, aus Siliziummaterial geätzte Membran zwischen Trägerplatten aus Glas eingesetzt werden.

Der vorliegenden Erfindung liegt daher die Aufgabe zugrunde, einen Drucksensor der eingangs genannten Art bereitzustellen, der auch eine hohe Unterlastfestigkeit aufweist, aber zugleich auch einfach herzustellen ist.

Erfindungsgemäß wird diese Aufgabe durch einen Drucksensor mit den Merkmalen des Patentanspruchs 1 gelöst.

Demgemäß wird ein gattungsgemäßer Drucksensor bereitgestellt, der dadurch gekennzeichnet ist, dass eine zweite Kammer zum Schutz der Messmembran bei Unterschreitung des zu messenden Druckes unter eine Druckuntergrenze vorgesehen ist, wobei die zweite Kammer zwischen der Messmembran und einer vollständig aus einem keramischen Werkstoff bestehenden Anschlagplatte, die auf der dem Grundkörper gegenüberliegenden Seite der Messmembran sitzt, angeordnet ist, und dass eine Bohrung vorgesehen ist, durch welche die Messmembran mit Druck beaufschlagbar ist.

Erfindungsgemäß wird damit ein Drucksensor mit optimaler Druckfestigkeit, dass heißt sowohl für einen Überdruck im Überlastfall als auch für einen Unterdruck im Unterlastfall, bereitgestellt.

Eine besonders vorteilhafte Weiterbildung der Erfindung ergibt sich, wenn zumindest eine der Kammern eine ringförmige Abstufung aufweist. Die dadurch gebildeten ringförmigen Auflageflächen der jeweiligen Stufen wirken bei einem Überdruck bzw. Unterdruck optimal unterstützend, wodurch die Messmembran zusätzlich vor Zerstörung bzw. Beschädigung geschützt werden kann. Besonders vorteilhaft ist es, wenn die Kammern mehrstufig ausgebildet sind.

Vorzugsweise sind der Grundkörper und die Anschlagplatte jeweils über diffusionsdichte, ringförmige Verbindungen mit der Messmembran verbunden. Als diffusionsdichte Verbindung wird vorzugsweise eine Glaslotverbindung verwendet. Selbstverständlich lässt sich diese Verbindung auch durch jedes andere Verbindungsmaterial realisieren, das eine ähnlich akzeptable diffusionsverhindernde Wirkung wie Glas oder Quarzglas besitzt, beispielsweise eine Hartlotverbindung, eine Schweißnahtverbindung oder eine Klebeverbindung. Die Glaslotringe weisen jedoch den Vorteil auf, dass sie elektrisch isolierend sind, auch bei hohen Temperaturen temperaturbeständig sind und keinerlei Diffusion von Gasen bzw. Wasserstoff von außen nach innen zulassen.

In einer bevorzugten Ausführungsform der Erfindung sind der Grundkörper und/oder die Messmembran und/oder die Anschlagplatte aus einem keramischen Werkstoff, wie zum Beispiel Al₂O₃-Keramik, SiC-Keramik, Glaskeramik, Quarz oder ZrO₂-Keramik, ausgebildet. Es wäre jedoch auch denkbar, dass der Grundkörper aus einer Eisen-Nickel-Legierung besteht, da diese Eisen-Nickel-Legierung einen ähnlichen Temperaturausdehungskoeffizienten wie die oben genannten Keramiken aufweist. Besonders vorteilhaft ist es in diesem Zusammenhang auch, wenn die Messmembran aus einem korrosionsbeständigen, vorteilhafterweise metallischen Werkstoff, wie zum Beispiel Edelstahl besteht. Bei der Verwendung von unterschiedlichen Werkstoffen für die Messmembran und den Grundkörper ist darauf zu achten, dass diese einen möglichst ähnlichen Temperaturausdehnungskoefffizienten aufweisen, damit gewährleistet werden kann, dass es bei Temperaturschwankungen zu möglichst geringen mechanischen Verspannungen kommt. Als besonders bevorzugt wird jedoch sowohl der Grundkörper als auch die Messmembran sowie die Anschlagplatte vollständig aus Keramik hergestellt.

Als Druckübertragungsmedium wird typischerweise ein Öl, beispielsweise Hydrauliköl oder Silikonöl, verwendet. Es könnte jedoch auch jede andere Flüssigkeit oder sogar ein Gas verwendet werden.

Der Drucksensor ist vorteilhafterweise als kapazitiver Drucksensor ausgebildet. Dabei bildet die Messmembran entweder die Schichtelektrode selbst oder eine kreisförmige oder kreisringförmige Schichtelektrode ist auf der Messmembran aufgebracht worden. Die jeweils andere Schichtelektrode des Messkondensators ist dann in der Kammer zwischen Messmembran und Grundkörper angeordnet, wobei als Dielektrikum typischerweise ein Vakuum oder ein gängiges, durchschlagfestes Gas verwendet wird.

Weitere vorteilhafte Ausgestaltungen und Weiterbildungen der Erfindung sind den weiteren Unteransprüchen, der Beschreibung und den Zeichnungen zu entnehmen.

Die Erfindung wird nachfolgend anhand der in den Figuren der Zeichnung angegebenen Ausführungsbeispiele näher erläutert. Es zeigt dabei:
- Fig. 1: ein erstes Ausführungsbeispiel des erfindungsgemäßen Drucksensors;
- Fig. 2: ein zweites Ausführungsbeispiel des erfindungsgemäßen Drucksensors.

In beiden Figuren der Zeichnung sind gleiche bzw. funktionsgleiche Elemente jeweils mit gleichen Bezugszeichen versehen worden.

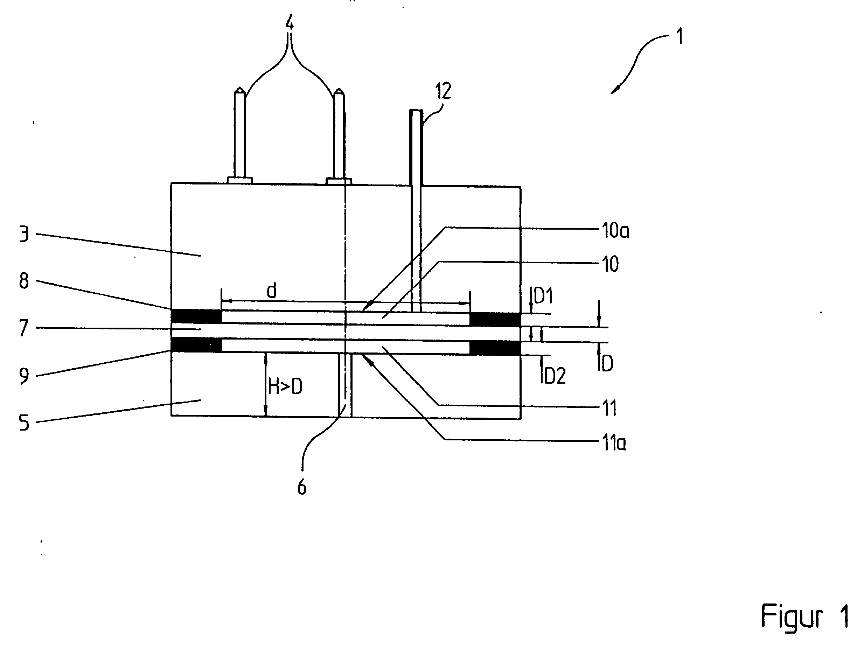

Fig. 1 zeigt in einem Teilschnitt ein erstes, allgemeines Ausführungsbeispiel eines erfindungsgemäßen Drucksensors. In Fig. 1 ist mit 1 der Drucksensor eines Druckmessumformers bezeichnet. Der Drucksensor 1 weist einen blockförmigen, vorzugsweise zylindrischen Grundkörper 3 auf. Vom Grundkörper 3 führen elektrische Anschlussstifte 4 aus dem Drucksensor 1 heraus. Eine Anschlagplatte 5 ist an der gegenüberliegenden Seite des Grundkörpers 3 angeordnet und über eine Bohrung 6 mit einem in Fig. 1 nicht dargestellten Druckmittler gekoppelt. Die Bohrung 6 ist vorteilhafterweise - jedoch nicht notwendigerweise -, in der Anschlagplatte 5 mittig angeordnet. Eine druckempfindliche Messmembran 7 ist zwischen Grundkörper 3 und Anschlagplatte 5 angeordnet. Über kreisringförmige, nach außen hin diffusionsdichte Verbindungen 8, 9 ist die Messmembran 7 einerseits an den Grundkörper 3 und andererseits an die Anschlagplatte 5 gekoppelt.

Zwischen der Messmembran 7 und dem Grundkörper 3 ist somit eine erste, typischerweise evakuierte oder gasgefüllte Kammer 10 ausgebildet. Zwischen der Messmembran 7 und der Anschlagplatte 5 ist eine zweite Kammer 11 ausgebildet, die mit der Bohrung 6 verbunden ist. Die Bohrung 6 und die zweite Kammer 11 enthalten ein Druckübertragungsmedium - typischerweise eine Flüssigkeit wie zum Beispiel ein Silikonöl oder Hydrauliköl -, über das die Messmembran 7 mit einem zu messenden Druck beaufschlagbar ist.

Der Drucksensor 1 ist derart ausgelegt, dass der zu messende Druck eine Verformung der Messmembran 7 zur Folge hat, der erfasst wird und in ein elektrisches Signal als Funktion der Verformung umgewandelt wird, welches über die elektrischen Anschlussstifte 4 aus dem Drucksensor 1 ausgekoppelt werden kann. Über eine weitere Bohrung 12, die mit der ersten Kammer 10 verbunden ist, lässt sich die erste Kammer 10 evakuieren bzw. diese Kammer 10 mit einem überschlagfesten Medium füllen. Alternativ wäre es auch denkbar, dass die erste Kammer 10 über die weitere Bohrung 12 dem Atmosphärendruck ausgesetzt wird.

Durch die Messmembran 7 und den Grundkörper 3 ist eine spaltförmige oder schlitzförmige Kammer 10 ausgebildet, die den Grundkörper 3 von der Messmembran 7 durch den Abstand D1 beabstandet. In gleicher Weise wird die Messmembran 7 von der Anschlagplatte 5 über die zweite schlitzförmige Kammer 11 durch den Abstand D2 beabstandet. Die erste Kammer 10 dient hier dem Überlastschutz, das heißt bei einem Übersteigen des Druckes über eine Druckobergrenze legt sich die Messmembran 7 an die gegenüberliegende Stirnfläche 10a des ersten Grundkörperteils 3 an und wird dadurch vor einer Zerstörung oder Beschädigung geschützt. Die zweite Kammer 11 dient dem Unterlastschutz, das heißt bei einem Unterdruck oder einem Sog, der über die Bohrung 6 in die zweite Kammer 11 eingekoppelt wird, legt sich die Messmembran 7 an die gegenüberliegende Stirnfläche 11a der Anschlagplatte 5 an, wodurch die Messmembran 7 bei Unterschreiten des Druckes unter eine Druckuntergrenze ebenfalls vor Zerstörung oder Beschädigung geschützt wird. Über die Abstände D1, D2 lässt sich die Überlast- und Unterlastfestigkeit des Drucksensor 1 sowohl für einen Überdruck als auch für einen Unterdruck definiert einstellen. Die Dimensionierung dieser Abstände D1, D2 hängt im Wesentlichen vom verwendeten Werkstoff der Messmembran 7, der Dicke D der Messmembran 7, deren aktiven Durchmesser d sowie von der angestrebten Druckober- und Druckuntergrenze ab.

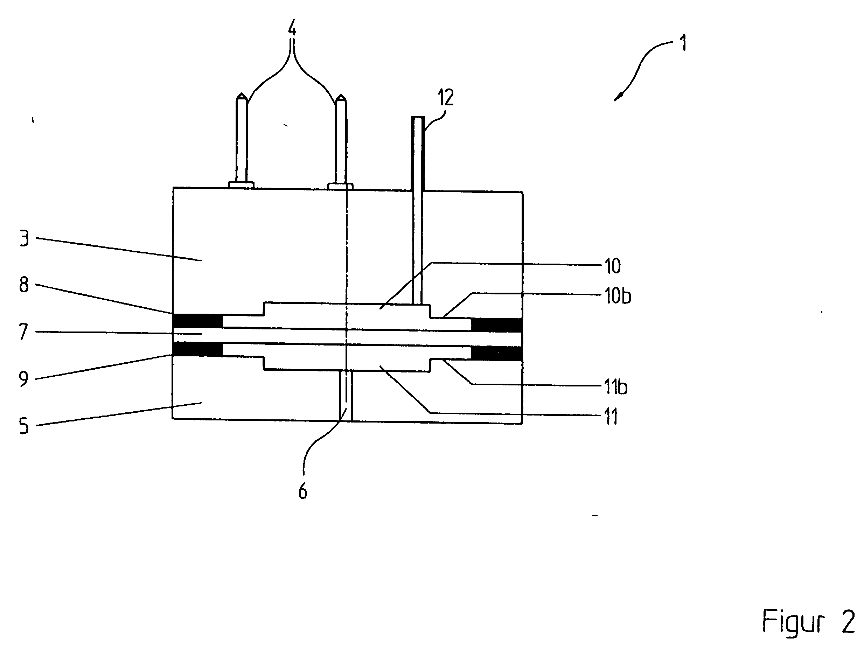

Fig. 2 zeigt ein zweites, weiterentwickeltes Ausführungsbeispiel des erfindungsgemäßen Drucksensors 1. Der Drucksensor 1 ist hier derart weitergebildet, dass sowohl die erste Kammer 10 als auch die zweite Kammer 11 stufenförmig ausgebildet sind. Bei einem Überdruck legt sich die Messmembran 7 zunächst an der gegenüberliegenden, ringförmigen Auflagefläche 10b der ersten Stufe an. Die mittigen Bereiche der Membran 7 sind bei einem Überdruck noch weiter ausdehnbar. Gleichermaßen ist für den Unterlastfall die zweite Kammer 11 ebenfalls stufenförmig ausgebildet, wodurch sich bei einem Unterdruck die Messmembran 7 zunächst an der gegenüberliegenden, ringförmigen Auflagefläche 11b der ersten Stufe anlegt. Diese durch die Flächen 10b, 11b gebildeten Anlageringe wirken bei einem Überdruck bzw. Unterdruck des Druckübertragungsmediums optimal unterstützend, wodurch die Messmembran 7 zusätzlich vor Zerstörung bzw. Beschädigung geschützt werden kann. Eine weitere Steigerung der Überlast- bzw. Unterlastfestigkeit bei erfindungsgemäßen Drucksensoren kann dadurch erreicht werden, dass die Messmembran 7 nicht nur an einem, sondern an mehreren, treppenförmig angebrachten Anlageringen angelegt und zusätzlich in der Mitte abgefangen wird.

Die Dicke der Messmembran D hängt insbesondere von dem für die Messmembran 7 verwendeten Werkstoff ab, bei Verwendung einer Messmembran 7 aus Edelstahl weist die Messmembran 7 typischerweise eine Dicke D im Bereich von 0,1 mm bis 2,0 mm auf. Darüber hinaus sollte bei der Dimensionierung der Anschlagplatte 5 darauf geachtet werden, dass deren Höhe H aus Stabilitätsgründen sehr viel größer sein sollte als die Dicke D der Messmembran 7.

## Patentansprüche

1. Überlastfester Drucksensor für einen Druckmessumformer zur Messung des Druckes von flüssigen oder gasförmigen Medien,
- mit einem Grundkörper (3),
- mit einer am Grundkörper (3) angeordneten und eine konstante Dicke (D) aufweisenden druckempfindlichen Messmembran (7), die von einem zu messenden Druck beaufschlagbar ist, und
- mit einer zwischen dem Grundkörper (3) und der Messmembran (7) angeordneten ersten Kammer (10) zum Schutz der Messmembran (7) bei Überschreiten des zu messenden Druckes über eine Druckobergrenze, wobei der Drucksensor
(1) als kapazitiver Drucksensor (1) ausgebildet ist, bei dem, die Messmembran (7) eine Schichtelektrode eines Messkondensators bildet oder auf der Messmembran (7) eine kreisförmige oder kreisringförmige Schichtelektrode angeordnet ist,
**dadurch gekennzeichnet, dass**
eine zweite Kammer (11) zum Schutz der Messmembran (7) bei Unterschreiten des zu messenden Druckes unter eine Druckuntergrenze vorgesehen ist, wobei die zweite Kammer (11) zwischen der Messmembran (7) und einer vollständig aus einem keramischen Werkstoff bestehenden Anschlagplatte (5), die auf der dem Grundkörper (3) gegenüberliegenden Seite der Messmembran (7) sitzt, angeordnet ist, und dass eine Bohrung (6) vorgesehen ist, durch welche die Messmembran (7) mit Druck beaufschlagbar ist.

2. Drucksensor nach Anspruch 1,
**dadurch gekennzeichnet, dass** zumindest eine der Kammern (10, 11) mindestens eine ringförmige Abstufung (10b, 11b) in der der Membran (7) gegenüberliegenden Wandung des Grundkörpers (3) und/oder der Anschlagplatte (5) aufweist.

3. Drucksensor nach Anspruch 1 oder 2,
**dadurch gekennzeichnet, dass** der Grundkörper (3) über eine erste diffusionsdichte Verbindung (8) und die Anschlagplatte (5) über eine zweite diffusionsdichte Verbindung (9) mit der Messmembran (7) verbunden ist.

4. Drucksensor nach Anspruch 3,
**dadurch gekennzeichnet, dass** zumindest eine der diffusionsdichten Verbindungen (8, 9) als kreisringförmige Glaslotverbindung ausgebildet ist.

5. Drucksensor nach einem der vorstehenden Ansprüche,
**dadurch gekennzeichnet, dass** zur Druckübertragung auf die Messmembran (7) ein Öl, insbesondere Hydrauliköl oder Silikonöl, vorgesehen ist.

## Claims

1. An overload-proof pressure sensor for a pressure measuring transducer for measuring the pressure of liquid or gaseous media,
- having a base body (3),
- having a pressure-sensitive measuring membrane (7) disposed on the base body (3) and having a constant thickness (D), which can be subjected to a pressure to be measured, and
- having a first chamber (10) disposed between the base body (3) and the measuring membrane (7) for protecting the measuring membrane (7) if the pressure to be measured exceeds an upper pressure limit, whereby the pressure sensor (1) is designed as a capacitive pressure sensor (1), in which the measuring membrane (7) forms a layer electrode of a measuring capacitor or a circular or annular layer electrode is disposed on the measuring membrane (7),
**characterised in that** a second chamber (11) is provided to protect the measuring membrane (7) if the pressure to be measured drops below a lower pressure limit, whereby the second chamber (11) is disposed between the measuring membrane (7) and a stop plate (5) made entirely from a ceramic material, which plate is seated on the side of the measuring membrane (7) opposite the base body (3),
**and in that** a bore (6) is provided, through which the measuring membrane (7) can be subjected to pressure.

2. A pressure sensor according to Claim 1,
**characterised in that** at least one of the chambers (10, 11) comprises at least one annular step (10b, 11b) in the wall of the base body (3) and/or of the stop plate (5) situated opposite the membrane (7).

3. A pressure sensor according to Claim 1 or 2,
**characterised in that** the base body (3) is connected to the measuring membrane (7) by means of a first diffusion-tight joint (8) and the stop plate (5) is connected to the measuring membrane (7) by means of a second diffusion-tight joint (9).

4. A pressure sensor according to Claim 3,
**characterised in that** at least one of the diffusion-tight joints (8, 9) is designed as an annular glass solder joint.

5. A pressure sensor according to one of the preceding Claims,
**characterized in that** an oil, in particular, a hydraulic or a silicone oil, is provided for transmitting the pressure onto the measuring membrane (7).

## Revendications

1. Capteur de pression résistant aux surcharges pour un convertisseur de pression de mesure servant à mesurer la pression de milieux liquides ou gazeux comprenant :
- un corps de base (3),
- une membrane de mesure (7) sensible à la pression, prévue sur le corps de base (3) et ayant une épaisseur constante (D), cette membrane étant soumise à la pression à mesurer, et
- une première chambre (10) entre le corps de base (3) et la membrane de mesure (7) pour protéger la membrane (7) en cas de dépassement de la pression à mesurer, au-delà de la limite supérieure de pression, le capteur de pression (1) étant réalisé sous la forme d'un capteur de pression (1) capacitif dont la membrane de mesure (7) forme une électrode de couche d'un condensateur de mesure et une électrode de couche de forme circulaire ou en anneau de cercle est réalisée sur la membrane (7),
**caractérisé par**
une seconde chambre (11) pour protéger la membrane de mesure (7) en cas de dépassement vers le bas de la pression à mesurer, en dessous d'une limite inférieure de pression,
la seconde chambre (11) étant située entre la membrane (7) et une plaque de butée (5) réalisée en matière céramique, cette plaque de butée s'appuyant contre le côté du corps de base (3) à l'opposé de la membrane (7) et en ce qu'il est prévu un perçage (6) permettant de mettre en pression la membrane de mesure (7).

2. Capteur de pression selon la revendication 1,
**caractérisé en ce qu'**
au moins l'une des chambres (10, 11) présente au moins un gradin annulaire (lOb, 11b) dans la paroi du corps de base (3) et/ou de la plaque de butée (5) en regard de la membrane (7).

3. Capteur de pression selon la revendication 1 ou 2,
**caractérisé en ce que**
le corps de base (3) est relié à la membrane de mesure (7) par une première liaison (8) étanche à la diffusion et la plaque de butée (5) par une seconde liaison étanche à la diffusion (9).

4. Capteur de pression selon la revendication 3,
**caractérisé en ce qu'**
au moins l'une des liaisons étanche à la diffusion (8, 9) est réalisée sous la forme d'une liaison soudée de verre, suivant une disposition annulaire.

5. Capteur de pression selon l'une des revendications précédentes,
**caractérisé en ce qu'**
une huile notamment de l'huile hydraulique ou de l'huile de silicone sont prévues sur la membrane (7) pour transmettre la pression.
